# EUROPÄISCHE PATENTSCHRIFT

(11) **EP 0 792 736 B1**
(45) Veröffentlichungstag und Bekanntmachung des Hinweises auf die Patenterteilung: **31.05.2000**
(21) Anmeldenummer: 97101671.2
(22) Anmeldetag: 04.02.1997
(51) Int. Cl.: B29C 69/00, F16C 13/00

(54) **Verfahren, spritzgegossene Laufrolle und Spritzgiessform zur Herstellung einer Laufrolle**
Method, injection moulded roller and injection mould for manufacturing a roller
Procédé, galet moulé par injection et moule d'injection pour fabriquer un galet

(30) Priorität: 29.02.1996 DE 19607645
(43) Veröffentlichungstag der Anmeldung: 03.09.1997
(73) Patentinhaber: Hachtel, Friedrich, 73431 Aalen (DE)
(72) Erfinder: Hachtel, Friedrich, 73431 Aalen (DE)
(74) Vertreter: Möbus, Daniela, Dr.-Ing.

(56) Entgegenhaltungen:
- EP-A- 0 706 875
- DE-A- 4 412 775
- US-A- 4 295 814

## Beschreibung

Die Erfindung betrifft ein Verfahren, eine spritzgegossene Laufrolle und eine Spritzgießform zur Herstellung einer Laufrolle gemäß den Oberbegriffen der Ansprüche 1, 3 und 5.

Ein Verfahren gemäß des Oberbegriffes des Anspruchs 1 ist bereits aus der DE 44 12 775 der Anmelderin bekannt. Mit diesem Verfahren können zwei Teile einer Laufrolle in einer gemeinsamen Spritzgießform gegossen und dort zusammenmontiert werden. Dies hat den großen Vorteil gegenüber älteren Verfahren, daß nicht mehr die getrennt gespritzten Rollenteile in Behältern aufgefangen und in einem weiteren, gesonderten Arbeitsschritt zusammenmontiert werden müssen.

Die nach dem bekannten Verfahren hergestellten Laufrollen werden anschließend auf Achszapfen oder Lagerbuchsen aufgesteckt und dienen insbesondere als Laufrollen von Schubauszügen von Geschirrspülmaschinen.

Der vorliegenden Erfindung liegt die Aufgabe zugrunde, das bekannte Herstellungsverfahren weiter zu rationalisieren.

Die Aufgabe wird mit einem Verfahren gemäß dem Oberbegriff des Anspruchs 1 erfindungsgemäß dadurch gelöst, daß gleichzeitig mit den beiden Rollenteilen in einem anderen Hohlraum der gleichen Spritzgießform die Lagerbuchse gespritzt wird, beim öffnen der Spritzgießform die Lagerbuchse an einer der Formhälften festgehalten wird und nach der Koppelung der beiden Rollenteile die Spritzgießformhälften erneut gegeneinander verdreht werden, so daß sich die gekoppelten Rollenteile und die Lagerbuchse gegenüberstehen und anschließend die gekoppelten Rollenteile mittels mindestens eines Spritzgießformteils auf die Lagerbuchse aufgedrückt werden.

Mit diesem Verfahren ist also nun die Komplettmontage einer Laufrolle mit einer Lagerbuchse möglich. Erst nach der vollständigen Herstellung wird das fertige Teil ausgeworfen. Das Auffangen von Einzelteilen entfällt hier also vollkommen. Die Vorteile des aus der DE 44 12 775 bekannten Verfahrens hinsichtlich der Korrekturmöglichkeit von Herstellungsfehlern bei den beiden Rollenteilen bleiben voll erhalten. Diese Fehler können durch kleine Ungenauigkeiten in einem der Hohlräume zur Ausbildung des einen Typs von Rollenteilen verursacht werden. Da bei dem erfindungsgemäßen Herstellungsverfahren sich immer die gleichen Hohlräume auch bei Vielfachformen zur Herstellung mehrerer Laufrollen in einem Arbeitsgang gegenüberstehen, kann der Fehler im Hohlraum für den einen Rollenteil durch eine entsprechende Korrektur des Hohlraums für den anderen Rollenteil ausgeglichen werden. Hierdurch ist gewährleistet, daß sämtliche produzierten Laufrollen hervorragende Laufeigenschaften aufweisen.

Die zur Durchführung des Verfahrens eingesetzte Spritzgießform weist zwei in axialer Richtung gegeneinander verfahrbare und um ihre Längsachse relativ zueinander verdrehbare Formhälften auf, die gemeinsam mindestens einen ersten Hohlraum zur Formung des ersten Laufrollenteils und mindestens einen zweiten Hohlraum zur Formung des zweiten Laufrollenteils sowie mindestens einen dritten Hohlraum zur Formung der Laufbuchse bilden, wobei die Hohlräume bezüglich der Rotationsachse der Spritzgießform symmetrisch angeordnet sind, und wobei mindestens eine der Formhälften einen in axialer Richtung beweglichen Teil zum Aufeinanderdrücken der beiden Laufrollenteile sowie zum Aufdrücken der gekoppelten Laufrollenteile auf die Lagerbuchse aufweist. Dabei kann zweckmäßigerweise einer der Formhälften, insbesondere die der Spritzdüse abgewandte Hälfte, jeweils in Schritten von 120° um die Längsachse der Spritzgießform verdrehbar angeordnet sein. Durch ein erstes Verdrehen um 120° stehen sich die beiden Rollenteile gegenüber und können durch Aufeinanderpressen gekoppelt werden. Anschließend dreht die Formhälfte erneut um 120° weiter, so daß die gekoppelten Rollenteile nun der fertig gespritzten Lagerbuchse gegenüberstehen und auf diese aufgedrückt werden können.

Die nach dem erfindungsgemäßen Verfahren hergestellte Laufrolle besteht aus zwei in axialer Richtung zusammengesetzten Teilen, die auf eine Lagerbuchse aufgesteckt sind, und ist dadurch gekennzeichnet, daß die beiden Rollenteile gemeinsam die Lauffläche der Laufrolle und einer der beiden Rollenteile eine zentrale Aufnahmeöffnung für die Lagerbuchse bilden. Dabei können die beiden Rollenteile durch eine Rastverbindung unlösbar miteinander gekoppelt sein.

Nachfolgend werden anhand der Zeichnung ein erfindungsgemäßes Verfahren zur Herstellung einer Laufrolle und die dazugehörige Spritzgießform näher erläutert.

Es zeigen:
- Fig. 1: einen Teilschnitt durch eine Spritzgießform im Bereich eines Hohlraums für ein erstes Rollenteil;
- Fig. 2: einen Teilschnitt durch die Spritzgießform nach Fig. 1 im Bereich eines Hohlraums für ein zweites Rollenteil;
- Fig. 3: einen Teilschnitt durch die Spritzgießform nach Fig. 1 im Bereich eines Hohlraums für eine Lagerbuchse;
- Fig. 4: eine schematische Darstellung der Anordnung der in den Fig. 1 bis 3 gezeigten Hohlräume in der Spritzgießform;
- Fig. 5: einen der Fig. 1 entsprechenden Teilschnitt durch eine Spritzgießform in einem zweiten Stadium eines erfindungsgemäßen Herstellungsverfahrens einer Laufrolle;
- Fig. 6: einen der Fig. 2 entsprechenden Teilschnitt durch eine Spritzgießform im zweiten Stadium des Herstellungsverfahrens;
- Fig. 7: einen der Fig. 3 entsprechenden Teilschnitt durch eine Spritzgießform im zweiten Stadium des Herstellungsverfahrens;
- Fig. 8: einen Teilschnitt durch die Spritzgießform in einem dritten Verfahrensstadium;
- Fig. 9: einen Teilschnitt durch die Spritzgießform in einem vierten Verfahrensstadium.

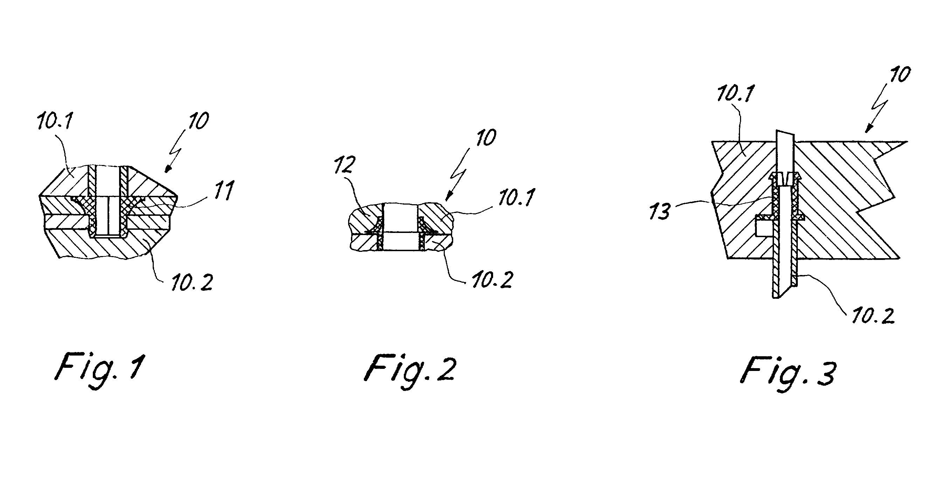

Die Fig. 1 bis 3 zeigen jeweils Teilschnitte durch eine Spritzgießform in geschlossenem Zustand im Bereich von Hohlräumen, die der Ausbildung von zwei Rollenteilen 11, 12 (Fig. 1, 2) und einer Lagerbuchse 13 dienen. Die Spritzgießform 10 wird von zwei Hälften 10.1, 10.2 gebildet, die auseinanderfahrbar sind. Der Hohlraum für den Rollenteil 11 wird im wesentlichen von der Spritzgießformhälfte 10.2 gebildet, derjenige für die Lagerbuchse 13 von der Spritzgießformhälfte 10.1 und derjenige für den Rollenteil 12 gleichmäßig von beiden Formhälften 10.1 und 10.2.

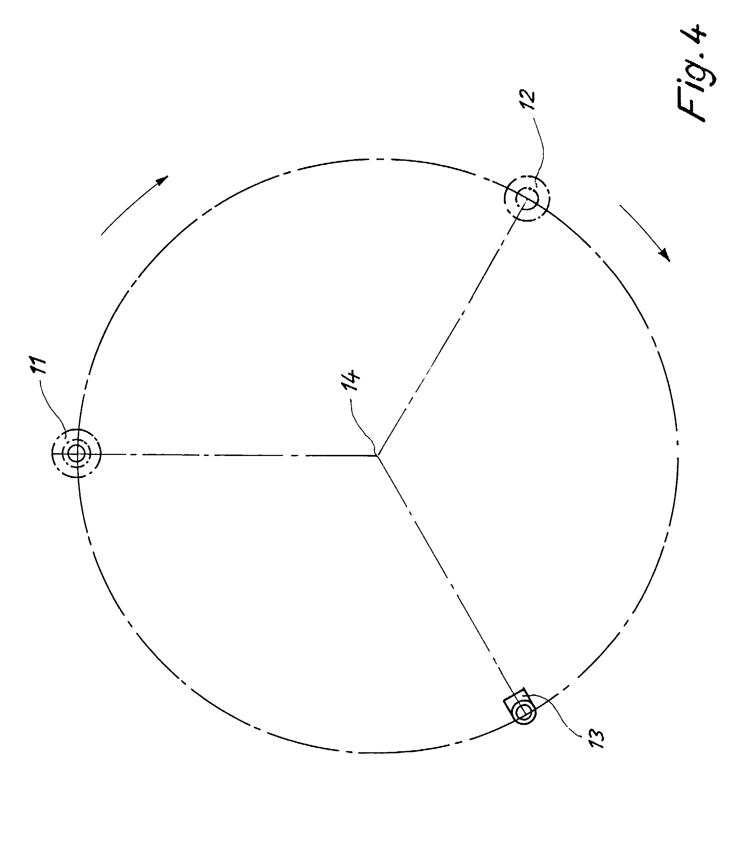

Fig. 4 zeigt die räumliche Anordnung der in den Fig. 1 bis 3 dargestellten Hohlraumbereiche für die Rollenteile 11, 12 und die Lagerbuchse 13. Diese Hohlräume sind auf einem Kreis um eine zentrale Rotationsachse 14 der Spritzgießform angeordnet und jeweils um einen Winkel von 120° voneinander beabstandet.

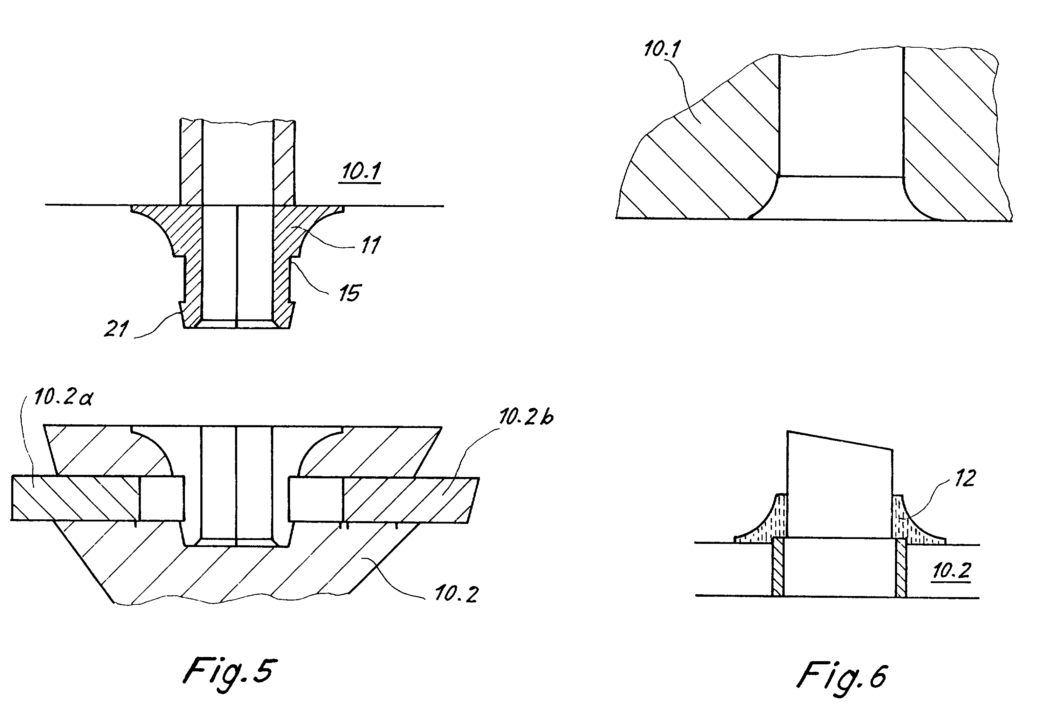

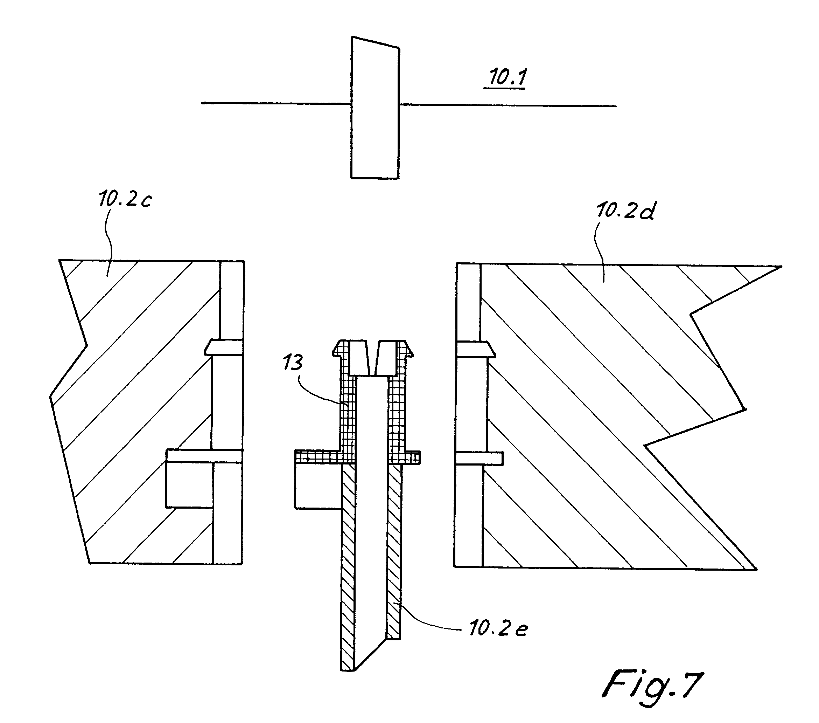

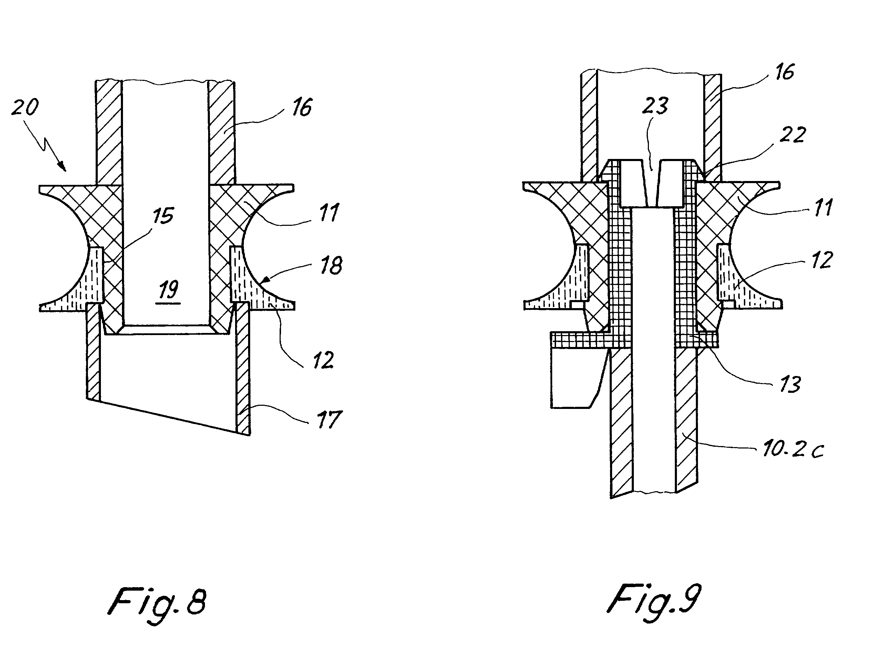

Zunächst werden die Teile 11, 12 und 13 in der in den Fig. 1 bis 3 gezeigten geschlossenen Stellung der Spritzgießform gleichzeitig gegossen. Anschließend wird die Spritzgießform 10 geöffnet. Die Schnittbilder durch die Hohlraumbereiche der Spritzgießform 10 in diesem Verfahrensstadium sind in den Fig. 5 bis 7 gezeigt. Wie in Fig. 5 gezeigt ist, verfahren vor dem öffnen der beiden Formhälften 10.1 und 10.2 innerhalb der Formhälfte 10.2 zwei Teilbereiche 10.2a und 10.2b der Formhälfte 10.2, um eine Hinterschneidung 15 des Rollenteils 11 freizugeben. Nach dem öffnen der beiden Formhälften 10.1 und 10.2 wird der fertig gegossene erste Rollenteil 11 an der Formhälfte 10.1 festgehalten. Der zweite Rollenteil 12 hingegen verbleibt nach öffnen der Formhälften 10.1 und 10.2 an der Formhälfte 10.2 (Fig. 6). Zur Entformung der Lagerbuchse 13 öffnet zunächst die Formhälfte 10.1, bevor anschließend zwei Teilbereiche 10.2c und 10.2d der Formhälfte 10.2 seitlich auseinanderfahren. Die Lagerbuchse 13 wird dann von einem dritten Teil 10.2e der Formhälfte 10.2 gehalten. Nach diesem in den Fig. 5 bis 7 gezeigten Verfahrensstadium dreht eine der Spritzgießformhälften 10.1 gegenüber der anderen Spritzgießformhälfte 10.2 um die Rotationsachse 14 um 120° weiter. Hierdurch kommen die beiden Rollenteile 11 und 12 einander gegenüber zu liegen. Sie können jetzt durch Aufeinanderdrücken gekoppelt werden, wie in Fig. 8 gezeigt ist. Hierzu bewegt sich ein beweglicher Stempel 16 der ersten Spritzgießformhälfte 10.1 sowie ein zweiter Stempel 17 der zweiten Spritzgießformhälfte 17.2 aufeinander zu. Der zweite Rollenteil 12 kann hierdurch in die Hinterschneidung 15 des ersten Rollenteils 11 einrasten. Wie Fig. 8 deutlich zeigt, bilden beiden Rollenteile 11 und 12 je zur Hälfte die Oberfläche 18 der Laufrolle 20, während der erste Rollenteil 11 vollständig eine zentrale Aufnahmeöffnung 19 für die Lagerbuchse 13 bildet. Nach dem in Fig. 8 gezeigten Kopplungsvorgang der beiden Rollenteile 11 und 12 sind diese durch eine Rastverbindung unlösbar miteinander verbunden. Der erste Rollenteil 11 weist hierzu einen umlaufenden Rastvorsprung 21 auf (Fig. 5), der nach der Kopplung der Teile 11 und 12 den Teil 12 übergreift.

Nach dem in Fig. 8 gezeigten Verfahrensstadium werden die gekoppelten Rollenteile 11, 12 an der Formhälfte 10.1 festgehalten, die bezüglich der anderen Formhälfte 10.2 wieder um 120° weitergedreht wird, wodurch nun die gekoppelten Rollenteile 11 und 12 gegenüber der Lagerbuchse 13 zu liegen kommen. Anschließend drückt der bewegliche Teil 10.2e der zweiten Formhälfte 10.2 die Lagerbuchse 13 in die zentrale Aufnahmeöffnung 19 der Laufrolle 20. Auch die Lagerbuchse 13 weist umlaufend Rastvorsprünge 22 auf, die nach dem Verpressen der Rollenteile 11 und 12 mit der Lagerbuchse 13 den Rollenteil 11 hintergreift. Im Gegensatz zur unlösbaren Rastverbindung zwischen den Rollenteilen 11 und 12 ist die Rastverbindung zwischen der Lagerbuchse 13 und den gekoppelten Rollenteilen 11 und 12 jedoch lösbar. Zwischen den Rastvorsprüngen 22 sind jeweils Schlitze 23 in die Lagerbuchse 13 eingeformt. Hierdurch ist ein Zusammenpressen der Rastvorsprünge 22 und damit ein Lösen der Lagerbuchse 13 aus der zentralen Aufnahmeöffnung des Rollenteils 11 möglich. Nach dem in Fig. 9 gezeigten Verfahrensschritt fahren die beiden Formhälften 10.1 und 10.2 vollständig auseinander, so daß die fertige Laufrolle 20 mit der Lagerbuchse 13 ausfällt. Anschließend dreht die eine Spritzgießformhälfte 10.1 erneut um 120° weiter und es beginnt ein neuer Gießvorgang von Teilen 11 bis 13.

In der Spritzgießform 10 könnten auch mehrere Laufrollen gleichzeitig hergestellt werden. Hierzu müßten radial nebeneinander einfach mehrere Hohlräume für die Teile 11 bis 13 vorgesehen sein. Dies würde eine Parallelfertigung mehrerer Rollen gleichzeitig erlauben.

## Patentansprüche

1. Verfahren zur Herstellung einer spritzgegossenen Laufrolle (20), die aus zwei in axialer Richtung zusammengesetzten Teilen (11, 12) sowie einer Lagerbuchse (13) besteht, mit den Schritten:
- gleichzeitiges Spritzen der beiden Rollenteile (11, 12) in gesonderten Hohlräumen (10.1, 10.2) einer gemeinsamen Spritzgießform (10),
- öffnen der Spritzgießform (10), wobei ein Rollenteil (11) an einer Hälfte der Spritzgießform (10.1) und der andere Rollenteil (12) an der gegenüberliegenden Hälfte (10.2) der Spritzgießform (10) festgehalten werden,
- Gegeneinanderverdrehen der beiden Spritzgießformhälften (10.1, 10.2), so daß sich die beiden Teile (11, 12) der Laufrolle (20) gegenüberstehen,
- Koppelung der beiden Rollenteile (11, 12) durch Aufeinanderdrücken mittels mindestens eines Teils der Spritzgießform,
dadurch gekennzeichnet, daß gleichzeitig mit den beiden Rollenteilen (11, 12) in einem anderen Hohlraum der gleichen Spritzgießform (10) die Lagerbuchse (13) gespritzt wird, beim öffnen der Spritzgießform (10) die Lagerbuchse (13) an einer der Formhälften (10.2) festgehalten wird, nach der Koppelung der beiden Rollenteile (11, 12) die Spritzgießformhälften (10.1, 10.2) erneut gegeneinander verdreht werden, so daß sich die gekoppelten Rollenteile (11, 12) und die Lagerbuche (13) gegenüberstehen und anschließend die gekoppelten Rollenteile (11, 12) mittels mindestens eines Spritzgießformteils (16, 10.2e) auf die Lagerbuchse aufgedrückt werden.

2. Verfahren nach Anspruch 1, dadurch gekennzeichnet, daß gleichzeitig mehrere Laufrollenteile (11, 12) und Lagerbuchsen (13) in der Spritzgießform (10) gegossen und zu fertigen Laufrollen (20) mit Lagerbuchsen (13) montiert werden.

3. Spritzgegossene Laufrolle, die nach dem Verfahren nach Anspruch 1 oder 2 hergestellt ist und aus zwei in axialer Richtung zusammengesetzten Teilen (11, 12) sowie einer Lagerbuchse (13) besteht, dadurch gekennzeichnet, daß beide Rollenteile (11, 12) die Lauffläche (18) der Laufrolle (20) und einer der beiden Rollenteile (11) eine zentrale Aufnahmeöffnung (19) für die Lagerbuchse (13) bilden.

4. Laufrolle nach Anspruch 3, dadurch gekennzeichnet, daß die beiden Rollenteile (11, 12) durch eine Rastverbindung (21, 12) unlösbar miteinander gekoppelt sind.

5. Spritzgießform zur Herstellung einer aus zwei in axialer Richtung zusammengesetzten Teilen (11, 12) und einer Lagerbuchsen (13) bestehenden Laufrolle (20) nach dem Verfahren gemäß Anspruch 1 oder 2, dadurch gekennzeichnet, daß sie von zwei in axialer Richtung gegeneinander verfahrbaren und um eine Längsachse (14) relativ zueinander verdrehbaren Formhälften (10.1, 10.2) gebildet ist, die gemeinsam mindestens einen ersten Hohlraum zur Formung des ersten Laufrollenteils (11), mindestens einen zweiten Hohlraum zur Formung des zweiten Laufrollenteils (12) und mindestens einen dritten Hohlraum zur Formung der Lagerbuchse (13) bilden, wobei die Hohlräume für die Teile (11 bis 13) auf einem Kreis um die Längsachse (14) der Spritzgießform (10) angeordnet sind, und wobei mindestens eine der Formhälften (10.1, 10.2) einen in axialer Richtung beweglichen Teil (16, 10.2e) zum Aufeinanderdrücken der Laufrollenteile (11, 12) und zum Montieren der Lagerbuchse (13) aufweist.

6. Spritzgießform nach Anspruch 5, dadurch gekennzeichnet, daß beide Formhälften (10.1, 10.2) im Bereich der Hohlräume für die beiden Laufrollenteile (11, 12) und die Lagerbuchse (13) bewegliche Teile (10.2e, 16, 17) aufweisen.

7. Spritzgießform nach Anspruch 5 oder 6, dadurch gekennzeichnet, daß einer der Formhälften (10.2) nicht rotierend und die andere Formhälfte (10.1) in Schritten von 120° um die Längsachse (14) der Spritzgießform (10) verdrehbar angeordnet ist.

## Claims

1. A process for producing an injection-moulded running roller (20), which consists of two parts (11, 12) which are assembled in an axial direction as well as a bearing bush (13), comprising the steps:
- simultaneous injection moulding of the two roller parts (11, 12) in separate cavities (10.1, 10,2) of a common injection mould (10),
- opening the injection mould (10), wherein one roller part (11) is held on one half of the injection mould (10.1) and the other roller part (12) is held on the opposite half (10.2) of the injection mould (10),
- twisting the two injection mould halves (10.1, 10.2) against each other so that the two parts (11, 12) of the running roller (20) are opposite,
- coupling the two roller parts (11, 12) by pressing them on to each other by means of at least one part of the injection mold,
characterised in that the bearing bush (13) is injection moulded simultaneously with the two roller parts (11, 12) in another cavity of the same injection mould (10), on opening the injection mould (10) the bearing bush (13) is held on one of the mould halves (10.2), after coupling the two roller parts (11, 12) the injection mould halves (10.1, 10,2) are twisted against each other again so that the coupled roller parts (11, 12) and the bearing bush (13) are opposite each other, and the coupled roller parts (11, 12) are subsequently pressed on to the bearing bush by means of at least one injection mould part (16, 10.2e).

2. A process according to claim 1, characterised in that a plurality of running roller parts (11, 12) and bearing bushes (13) are simultaneously injection moulded in the injection mould (10) and are assembled to form finished running rollers (20) with bearing bushes (13).

3. An injection moulded running roller which is produced by the process according to claims 1 or 2 and which consists of two parts (11, 12) which are assembled in an axial direction as well as a bearing bush (13), characterised in that the two running roller parts (11, 12) form the running face (18) of the running roller (20) and one of the two roller parts (11) forms a central receiver opening (19) for the bearing bush (13).

4. A running roller according to claim 3, characterised in that the two roller parts (11, 12) are coupled undetachably to each other by a locking connection (21, 12).

5. An injection mould for producing a running roller (20) consisting of two parts (11, 12) which are assembled in an axial direction as well as a bearing bush (13), by the process according to claims 1 or 2, characterised in that it is formed by two mould halves (10.1, 10.2), which can move against each other in an axial direction and which can be twisted about a longitudinal axis (14) in relation to each other, and which jointly form at least one first cavity for moulding the first running roller part (11), at least one second cavity for moulding the second running roller part (12) and at least one third cavity for moulding the bearing bush (13), wherein the cavities for the parts (11 to 13) are disposed on a circle about the longitudinal axis (14) of the injection mould (10), and wherein at least one of the mould halves (10.1, 10.2) comprises a part (16, 10.2e) which is movable in an axial direction for pressing the running roller parts (11, 12) on to each other and for assembling the bearing bush (13).

6. An injection mould according to claim 5, characterised in that the two mould halves (10.1, 10.2) comprise movable parts (10.2e, 16, 17) in the region of the cavities for the two running roller parts (11, 12) and the bearing bush (13).

7. An injection mould according to claims 5 or 6, characterised in that one of the mould halves (10.2) is non-rotating and the other mould half (10.1) is disposed so that it can be twisted in steps of 120° about the longitudinal axis (14) of the injection mould (10).

## Revendications

1. Procédé pour la fabrication d'un galet moulé par injection (20) qui se compose de deux parties (11, 12) assemblées en direction axiale ainsi que d'un coussinet (13), au moyen des étapes consistant à :
- injecter simultanément les deux parties de galet (11, 12) dans des cavités distinctes (10.1, 10.2) d'un moule d'injection commun (10),
- ouvrir le moule d'injection (10), une partie de galet (11) étant retenue dans une moitié du moule d'injection (10.1) et l'autre partie de galet (12) l'étant dans la moitié opposée (10.2) du moule d'injection (10),
- tourner les deux moitiés de moule d'injection (10.1, 10.2) l'une par rapport à l'autre, de façon que les deux parties (11, 12) du galet (20) se trouvent en vis-à-vis,
- accoupler les deux parties de galet (11, 12) en les pressant l'une sur l'autre au moyen d'au moins une partie du moule d'injection,
caractérisé en ce que le coussinet (13) est moulé par injection dans une autre cavité du même moule d'injection (10) en même temps que les deux parties de galet (11, 12), le coussinet (13) est retenu dans une des moitiés de moule (10.2) lors de l'ouverture du moule d'injection (10), les moitiés de moule d'injection (10.1, 10.2) sont à nouveau tournées l'une par rapport à l'autre après accouplement des deux parties de galet (11, 12), de sorte que les parties de galet accouplées (11, 12) et le coussinet (13) se trouvent en vis-à-vis, et les parties de galet accouplées (11, 12) étant ensuite pressées sur le coussinet au moyen d'au moins une partie de moule d'injection (16, 10.2e).

2. Procédé selon la revendication 1, caractérisé en ce que plusieurs parties de galet (11, 12) et plusieurs coussinets (13) sont moulés simultanément dans le moule d'injection (10) et montés pour obtenir des galets finis (20) avec des coussinets (13).

3. Galet moulé par injection, fabriqué au moyen du procédé selon la revendication 1 ou 2 et se composant de deux parties (11, 12) assemblées en direction axiale ainsi que d'un coussinet (13), caractérisé en ce que les deux parties de galet (11, 12) forment la surface de roulement (18) du galet (20) et l'une des deux parties de galet (11) forme une ouverture centrale de logement (19) pour le coussinet (13).

4. Galet selon la revendication 3, caractérisé en ce que les deux parties de galet (11, 12) sont accouplées l'une à l'autre de manière indémontable par une liaison encliquetée (21, 12).

5. Moule d'injection pour la fabrication d'un galet moulé par injection (20), qui se compose de deux parties (11, 12) assemblées en direction axiale, et d'un coussinet (13), au moyen du procédé selon la revendication 1 ou 2, caractérisé en ce qu'il est formé de deux moitiés de moule (10.1, 10.2) qui peuvent se déplacer l'une par rapport à l'autre en direction axiale et tourner l'une par rapport à l'autre autour d'un axe longitudinal (14) et qui forment conjointement au moins une première cavité pour le moulage de la première partie de galet (11), au moins une deuxième cavité pour le moulage de la deuxième partie de galet (12) et au moins une troisième cavité pour le moulage du coussinet (13), les cavités pour les parties (11 à 13) étant disposées sur un cercle autour de l'axe longitudinal (14) du moule d'injection (10), et au moins une des moitiés de moule (10.1, 10.2) comportant une partie (16, 10.2e) mobile en direction axiale pour presser les parties de galet (11, 12) l'une contre l'autre et pour monter le coussinet (13).

6. Moule d'injection selon la revendication 5, caractérisé en ce que, dans la zone des cavités pour les deux parties de galet (11, 12) et le coussinet (13), les deux moitiés de moule (10.1, 10.2) comportent des parties mobiles (10.2e, 16, 17).

7. Moule d'injection selon la revendication 5 ou 6, caractérisé en ce que l'une des moitiés de moule (10.2) est montée sans possibilité de rotation et l'autre moitié de moule (10.1) est montée avec la possibilité de tourner par pas de 120° autour de l'axe longitudinal (14) du moule d'injection (10) .
